# EUROPÄISCHE PATENTSCHRIFT

(11) **EP 1 342 833 B1**
(45) Veröffentlichungstag und Bekanntmachung des Hinweises auf die Patenterteilung: **18.10.2006**
(21) Anmeldenummer: 02026551.8
(22) Anmeldetag: 28.11.2002
(51) Int. Cl.: D21B 1/32, D21D 5/02, D21F 1/66

(54) **Verfahren zur Reduzierung und Einstellung des Gehaltes von feinen Feststoffen in einer Papierfasersuspension**
Method for reducing and adjusting the content of fine solids in a pulp suspension
Procédé pour la réduction et le réglage de la teneur des particules solides fines d'une suspension de pâte à papier

(30) Priorität: 07.03.2002 DE 10209995; 24.04.2002 DE 10218265
(43) Veröffentlichungstag der Anmeldung: 10.09.2003
(73) Patentinhaber: Voith Patent GmbH, 89522 Heidenheim (DE)
(72) Erfinder: Bätz, Elisabeth, 88273 Fronreute (DE); Peschl, Alexander, 88214 Ravensburg (DE); Stetter, Andrea, 88074 Meckenbeuren (DE)

(56) Entgegenhaltungen:
- DE-A- 3 005 681
- US-A- 4 865 690

## Beschreibung

Die Erfindung bezieht sich auf ein Verfahren gemäß dem Oberbegriff des Anspruchs 1.

Solches Verfahren ist z.B. aus der US 4 865 690 bekannt.

Bekanntlich enthalten Papierfasersuspensionen nicht nur die eigentlichen Papierfasern, sondern auch eine mehr oder weniger große Menge von feinen Feststoffen. Solche feinen Feststoffe können mineralische Füllstoffe sein, die in der Regel zur Papiererzeugung nötig sind. Man nennt sie zumeist "Asche". Es können aber auch Faserbruchstücke sein, die z.B. bei der Mahlung der Fasern entstehen. Diese werden auch Feinstoffe genannt. Darüber hinaus gibt es besonders in Altpapiersuspensionen Druckfarbenpartikel oder sonstige feine Verunreinigungen. Die Entfernung dieser feinen Feststoffe wird Entaschung genannt, da die unbrennbaren Füllstoffe oft den größten Anteil haben.

Es ist nun sehr stark von der Art und Qualität des aus dieser Papierfasersuspension später hergestellten Papieres abhängig, in welchem Maße die feinen Feststoffe in der Suspension verbleiben sollen, bzw. in welcher Menge sie zu entfernen sind. Oft werden sie in sogenannten Wäschern abgeschieden, da sie sich auf Grund ihrer Feinheit mechanisch leicht von den Fasern trennen und mit dem Waschfiltrat abführen lassen. Solche Waschvorrichtungen können mit einem oder zwei umlaufenden Endlossieben arbeiten, wie sie z.B. in der DE 30 05 681 ausführlich beschrieben sind. Eine andere Möglichkeit ist die Verwendung eines an sich bekannten Schneckeneindickers. Neuerdings werden für diesen Zweck aber auch Drucksortierer verwendet, die so betrieben werden, dass nicht - wie üblich - die Fasern in den Durchlauf, sondern in den Überlauf gelangen, wodurch sich die Möglichkeit des Auswaschens von feinen Feststoffen bietet. Auch wenn mit den genannten Maschinen zumeist eine ausreichende Entaschung möglich ist, haben sie doch den Nachteil, dass sich der Entaschungseffekt bei laufendem Betrieb nur in geringem Maße verändern lässt.

Bei Verfahren der hier genannten Art wird die wegen der Wäsche relativ dünne Suspension anschließend wieder eingedickt, um die nachfolgenden Aufbereitungsschritte optimal durchführen zu können. Die zum Eindicken verwendete Filtervorrichtung arbeitet insofern ähnlich wie die Waschvorrichtung, als sie auf mechanischem Wege das Wasser vom Faserstoff trennt. Der große Unterschied liegt aber darin, dass beim Filtern ein möglichst großer Teil des Feststoffes zurückgehalten wird. Dazu sind Scheibenfilter besonders günstig.

Der Erfindung liegt die Aufgabe zu Grunde, bekannte Verfahren dieser Art so zu verbessern, dass sich der Gehalt von feinen Feststoffen schnell und sicher einstellen lässt. Rohstoffschwankungen sollten ausgeglichen werden können.

Diese Aufgabe wird durch die im Kennzeichen des Anspruchs 1 genannten Merkmale gelöst.

Mit Hilfe des erfindungsgemäßen Verfahrens ist der Betrieb einer Kombination von Wasch- und Filtervorrichtung besonders vorteilhaft möglich. Durch Verändern der Mengenaufteilung des Waschfiltrats kann sofort, also praktisch ohne Totzeiten, der Gehalt der feinen Feststoffe - bezogen auf den gesamten Feststoff - in der später eingedickten Suspension verändert und auf den gewünschten Wert gebracht werden. Dabei kann die Waschvorrichtung konstant gefahren und auf optimale Wäsche eingestellt werden. Optimale Wäsche heißt, dass ein möglichst großer Anteil der in der Papierfasersuspension enthaltenen feinen Stoffe ins Filtrat gelangt. Bekanntlich wird dieser Auswascheffekt dadurch erschwert, dass sich auch bei Waschvorrichtungen Filterkuchen bilden, die geeignet sind, auch die feinen Feststoffe zurückzuhalten. Um dennoch einen guten Auswascheffekt zu erzielen, sollte die Maschine entsprechend optimiert werden, was erleichtert wird, wenn sie mit konstantem Durchsatz gefahren werden kann. Auch die den Gutstoff der Waschvorrichtung verarbeitende Filtervorrichtung kann im Wesentlichen konstant betrieben werden, was wiederum ein großer Vorteil ist. Schwankungen kommen lediglich durch die Variation des Ergänzungsanteils zustande. Auch das lässt sich durch eine besonders vorteilhafte Ausgestaltung der Erfindung vermeiden, nämlich indem nach Entstoffung des Verdünnungsanteils das dabei gebildete Filtrat ebenfalls zusammen mit dem Ergänzungsanteil in die Filtervorrichtung zugegeben wird. In anderen Fällen kann es aber auch sinnvoll sein, dieses Filtrat an anderer Stelle zum Verdünnen zu nehmen, weil dadurch die Filtervorrichtung volumendurchsatzmäßig entlastet wird.

Die Erfindung und ihre Vorteile werden erläutert an Hand von Zeichnungen, von denen
- Fig. 1: ein Verfahrensschema zur Durchführung und
- Fig. 2: eine Variante
beinhaltet.

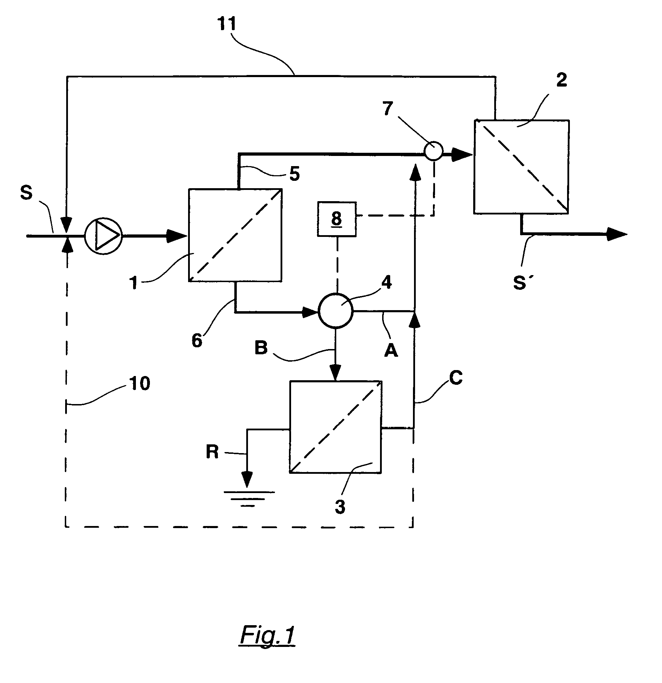

Die Figur 1 zeigt, dass die Papierfasersuspension S zunächst in die Waschvorrichtung 1 eingepumpt wird. Der darin gebildete Gutstoff 5 enthält den größten Teil der Fasern und gelangt anschließend zur Eindickung in die Filtervorrichtung 2. Das ablaufende Waschfiltrat 6 wird in einem Stellventil 4 aufgeteilt in den Ergänzungsanteil A und den Verdünnungsanteil B. Der Ergänzungsanteil A geht zusammen mit dem Gutstoff 5 in die Filtervorrichtung 2. Der Verdünnungsanteil B wird in einer Entstoffung 3 so behandelt, dass ein Filtrat C mit höchstens sehr geringem Feststoffanteil anfällt sowie ein Rejekt R, der im Wesentlichen die durch das Verfahren abgeschiedenen feinen Feststoffe enthält. Zur Entstoffung kann mit Vorteil eine sogenannten Entspannungsflotation (Abkürzung "DAF" = dissolved air flotation) durchgeführt werden. Bei dieser bilden sich durch Druckentspannung der Suspension sehr feine Luftblasen, die die Abscheidung aller Feststoffteilchen, also auch der hydrophilen Anteile, ermöglichen. Der Rejekt R der Entstoffung 3 kann Füllstoffe und/oder Faserfeinstoffe und/oder Farbpartikel enthalten. Er wird verworfen oder z.B. an anderer Stelle in der Papierfabrikation eingesetzt. In bestimmten Fällen ist es auch nützlich, aus dem Rejekt R die Füllstoffe zu isolieren und bei der Papierfabrikation wieder zu verwenden.

Das Filtrat C aus dieser Entstoffung 3 kann mit Vorteil der Filtervorrichtung 2 zugeführt werden, um - wie bereits erwähnt - dessen Volumendurchsatz konstant zu halten. Es ist aber auch denkbar, dieses Filtrat C an anderer Stelle zur Verdünnung zu verwenden, wozu hier die gestrichelte Linie 10 eingezeichnet ist. Ferner zeigt diese Figur eine Möglichkeit, auch das in der Filtervorrichtung 2 gebildete Filtrat durch die Leitung 11 zu Verdünnungszwecken zurückzuführen. Selbstverständlich gibt es auch andere Möglichkeiten, das ist eine Frage des Wassermanagements. Als eingedickter Stoff bildet sich in der Filtervorrichtung 2 eine Faserstoffsuspension S', die die gewünschten Werte aufweist, sowohl was den Gehalt an feinen Stoffen, als auch die Konsistenz betrifft. Es ist besonders vorteilhaft, in der zur Durchführung des Verfahrens verwendeten Anlage z.B. im Einlauf zur Filtervorrichtung 2 ein online-Messgerät 7 zu installieren, das dort den Aschegehalt bestimmt. Solche Geräte sind bekannt. Über einen Regler 8 kann dann ein Steuersignal für das Stellventil 4 gebildet werden. Selbstverständlich kann dieser Regelkreis auch in den Prozessrechner für die gesamte Anlage aufgenommen werden, eventuell um weitere Kriterien zur Optimierung der Anlage zu berücksichtigen.

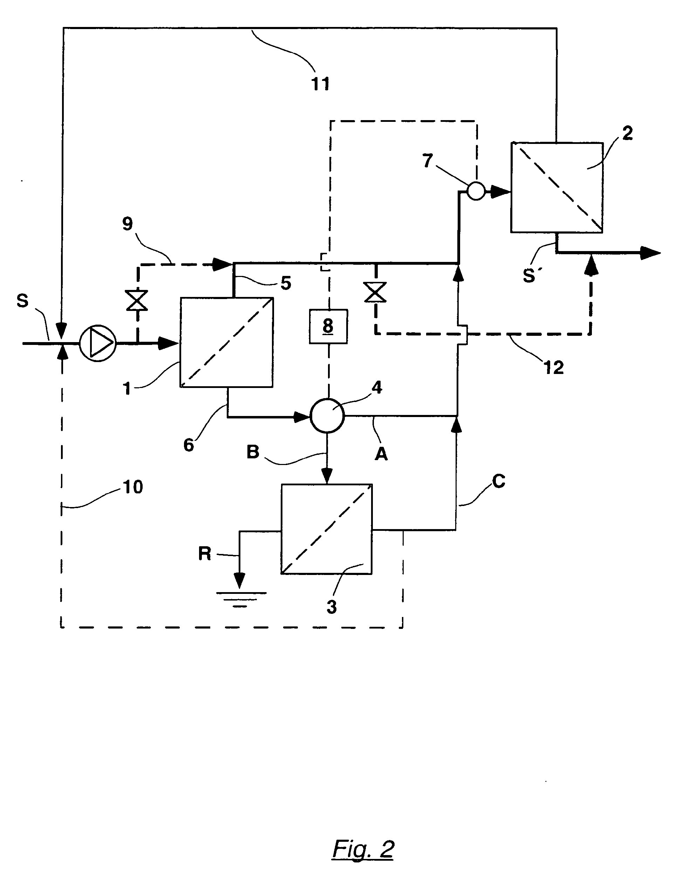

Wie Fig. 2 zeigt, kann das Verfahren auch so variiert werden, dass ein Teil des aus der Waschvorrichtung 1 stammenden Gutstoffes 5 nicht in die Filtervorrichtung 2 gelangt, sondern als Bypassstrom 12 in die daraus entnommene eingedickte Suspension S'. Dadurch kann die Filtervorrichtung 2 kleiner ausgelegt werden, und der gesamte Betrieb wird wirtschaftlicher. Mit Vorteil wird dieser Bypassstrom 12 konstant gehalten oder ein Minimalwert nicht unterschritten. Eine ähnliche Überlegung ist auch beim Betrieb der Waschvorrichtung 1 anstellbar. Auch dieser Apparat kann, wie die Figur 2 alternativ zeigt, durch einen über eine Umgehungsleitung 9 geführten Bypassstrom entlastet werden, sofern auch dann die Anforderungen an den Wascheffekt noch erfüllt werden.

In Anlagen mit gemischtem Betrieb kann es auch vorkommen, dass zeitweise ein Auswaschen von feinen Stoffen aus der Faserstoffsuspension unnötig ist. In diesem Fall führt die Umgehungsleitung 9 den gesamten Strom der Faserstoffsuspension S. Der Wäscher wird dann so lange abgeschaltet. Insgesamt lässt sich also durch das beschriebene Verfahren eine sehr große Bandbreite von Entaschungsgraden bei besonders ökonomischem Betrieb der eingesetzten Apparaturen realisieren.

## Patentansprüche

1. Verfahren zur Reduzierung und Einstellung des Gehaltes von feinen Feststoffen in einer Papierfasersuspension, insbesondere einer aus Altpapier gewonnenen Papierfasersuspension, mit Hilfe von mindestens einer Waschvorrichtung (1) sowie von mindestens einer Filtervorrichtung (2),
**dadurch gekennzeichnet,**
**dass** die Papierfasersuspension (S) zunächst zumindest teilweise über die Waschvorrichtung (1) geführt wird, deren Gutstoff (5) zumindest teilweise in die Filtervorrichtung (2) gelangt, während das Waschfiltrat (6) der Waschvorrichtung (1) aufgeteilt wird in einen dem Gutstoff (5) wieder zugeführten Ergänzungsanteil (A) sowie einen Verdünnungsanteil (B), wobei diese Mengenaufteilung des Waschfiltrates (6) so eingestellt wird, dass die in der Filtervorrichtung (2) eingedickte Suspension (S') den gewünschten Gehalt an feinen Feststoffen hat.

2. Verfahren nach Anspruch 1,
**dadurch gekennzeichnet,**
**dass** die Menge des Verdünnungsanteils (B) erhöht wird, wenn der Gehalt der feinen Feststoffe gesenkt werden soll.

3. Verfahren nach Anspruch 1 oder 2,
**dadurch gekennzeichnet,**
**dass** der Verdünnungsanteil (B) entstofft wird.

4. Verfahren nach Anspruch 3,
**dadurch gekennzeichnet,**
**dass** die Entstoffung (3) durch eine Entspannungsflotation durchgeführt wird.

5. Verfahren nach Anspruch 3 oder 4,
**dadurch gekennzeichnet,**
**dass** der entstoffte Verdünnungsanteil als Filtrat (C) in die Filtervorrichtung (2) geführt wird.

6. Verfahren nach einem der voranstehenden Ansprüche,
**dadurch gekennzeichnet,**
**dass** die Waschvorrichtung (1) so betrieben wird, dass mindestens 10 % des in der Papierfasersuspension (S) enthaltenen Feststoffes in das Waschfiltrat (6) gelangt.

7. Verfahren nach einem der voranstehenden Ansprüche,
**dadurch gekennzeichnet,**
**dass** mit Hilfe eines online-Messgerätes (7) der Gehalt an feinen Feststoffen im Einlauf zur Filtervorrichtung (2) gemessen wird und dass dieses Messsignal mit Hilfe eines Reglers (8) ein Stellventil (4) ansteuert, mit dem die Aufteilung des Waschfiltrates (6) in den Ergänzungsanteil (A) und den Verdünnungsanteil (B) vorgenommen wird.

8. Verfahren nach einem der voranstehenden Ansprüche,
**dadurch gekennzeichnet,**
**dass** die Waschvorrichtung (1) mit einem zeitlich konstanten Volumendurchsatz betrieben wird.

9. Verfahren nach einem der voranstehenden Ansprüche,
**dadurch gekennzeichnet,**
**dass** ein Teil des Gutstoffes (5) unter Umgehung der Filtervorrichtung (2) in die eingedickte Suspension (S') geführt wird.

10. Verfahren nach Anspruch 9,
**dadurch gekennzeichnet,**
**dass** der Teil des Gutstoffes (5) konstant gehalten wird.

11. Verfahren nach einem der voranstehenden Ansprüche,
**dadurch gekennzeichnet,**
**dass** ein Teil der Suspension (S) unter Umgehung der Waschvorrichtung (1) in deren Gutstoff (5) geführt wird.

12. Verfahren nach Anspruch 11,
**dadurch gekennzeichnet,**
**dass** der in dem Gutstoff (5) geführte Teil der Suspension (S) konstant gehalten wird.

13. Verfahren nach einem der voranstehenden Ansprüche,
**dadurch gekennzeichnet,**
**dass** zumindest ein Teil der feinen Feststoffe, deren Gehalt eingestellt wird, mineralische Füllstoffe, sogenannte Aschen, sind.

14. Verfahren nach einem der voranstehenden Ansprüche,
**dadurch gekennzeichnet,**
**dass** zumindest ein Teil der feinen Feststoffe, deren Gehalt eingestellt wird, Farbpartikel sind.

15. Verfahren nach einem der voranstehenden Ansprüche,
**dadurch gekennzeichnet,**
**dass** zumindest ein Teil der feinen Feststoffe, deren Gehalt eingestellt wird, Faserbruchstücke sind.

## Claims

1. Method for reducing and adjusting the content of fine solids in a papermaking pulp suspension, in particular a papermaking pulp suspension recovered from waste paper, by means of at least one washing device (1) and also at least one filter device (2),
**characterised in that**
the papermaking pulp suspension (S) is guided initially at least partially over the washing device (1), the accepted stock (5) of which passes at least partially into the filter device (2), whilst the washing filtrate (6) of the washing device (1) is divided into a supplementary proportion (A), which is supplied again to the accepted stock (5), and also a diluting proportion (B), this division of the quantity of washing filtrate (6) being adjusted such that the suspension (S') thickened in the filter device (2) has the desired content of fine solids.

2. Method according to claim 1,
**characterised in that**
the quantity of the diluting proportion (B) is increased if the content of fine solids is to be reduced.

3. Method according to claim 1 or 2,
**characterised in that**
the diluting proportion (B) has the material removed.

4. Method according to claim 3,
**characterised in that**
the removal of material (3) is implemented by a pressure reduction flotation.

5. Method according to claim 3 or 4,
**characterised in that**
the diluting proportion which has the material removed is guided into the filter device (2) as filtrate (C).

6. Method according to one of the preceding claims,
**characterised in that**
the washing device (1) is operated such that at least 10% of the solids contained in the papermaking pulp suspension (S) passes into the washing filtrate (6).

7. Method according to one of the preceding claims,
**characterised in that**
the content of fine solids in the inlet to the filter device (2) is measured by means of an online measuring instrument (7) and **in that** this measuring signal actuates an adjustment valve (4) by means of a controller (8), with which valve the division of the washing filtrate (6) into the supplementary proportion (A) and the diluting proportion (B) is undertaken.

8. Method according to one of the preceding claims,
**characterised in that**
the washing device (1) is operated with a temporally constant volume throughput.

9. Method according to one of the preceding claims,
**characterised in that**
a part of the accepted stock (5) is guided into the thickened suspension (S') by bypassing the filter device (2).

10. Method according to claim 9,
**characterised in that**
the part of the accepted stock (5) is kept constant.

11. Method according to one of the preceding claims,
**characterised in that**
a part of the suspension (S) is guided into the accepted stock (5) thereof by bypassing the washing device (1).

12. Method according to claim 11,
**characterised in that**
the part of the suspension (S) guided in the accepted stock (5) is kept constant.

13. Method according to one of the preceding claims,
**characterised in that**
at least a part of the fine solids, the content of which is adjusted, is mineral fillers, so-called ashes.

14. Method according to one of the preceding claims,
**characterised in that**
at least a part of the fine solids, the content of which is adjusted, is coloured particles.

15. Method according to one of the preceding claims,
**characterised in that**
at least a part of the fine solids, the content of which is adjusted, is fibre fragments.

## Revendications

1. Procédé destiné à la réduction et au réglage de la teneur en fines matières solides d'une suspension de fibres de papier, notamment d'une suspension de fibres de papier obtenue à partir de vieux papiers, à l'aide d'au moins un dispositif de lavage (1) ainsi que d'au moins un dispositif de filtration (2),
**caractérisé en ce que**
la suspension de fibres de papier (S) passe dans un premier temps, au moins partiellement, dans le dispositif de lavage (1) dont la pâte à papier acceptée (5) arrive, au moins partiellement, dans le dispositif de filtration (2), alors que le filtrat de lavage (6) du dispositif de lavage (1) est réparti en une proportion de complément (A) gui est à nouveau amenée à la pâte à papier acceptée (5), ainsi qu'en une proportion de dilution (B), cette répartition quantitative du filtrat de lavage (6) étant réglée de telle sorte que la suspension (S') épaissie dans le dispositif de filtration (2) ait la teneur souhaitée en fines matières solides.

2. Procédé selon la revendication 1,
**caractérisé en ce que**
la quantité de la proportion de dilution (B) est augmentée lorsque la teneur en fines matières solides doit être réduite.

3. Procédé selon la revendication 1 ou 2,
**caractérisé en ce que**
la proportion de dilution (B) est dématérialisée.

4. Procédé selon la revendication 3,
**caractérisé en ce que**
la dématérialisation (3) est effectuée par une flottation de détente.

5. Procédé selon la revendication 3 ou 4,
**caractérisé en ce que**
la proportion de dilution dématérialisée est amenée dans le dispositif de filtration (2) en tant que filtrat (C).

6. Procédé selon l'une des revendications précédentes,
**caractérisé en ce que**
le dispositif de lavage (1) fonctionne de telle sorte qu'au moins 10 % de la matière solide contenue dans la suspension de fibres de papier (S) arrive dans le filtrat de lavage (6).

7. Procédé selon l'une des revendications précédentes,
**caractérisé en ce que**
la teneur en fines matières solides est mesurée à l'entrée du dispositif de filtration (2) à l'aide d'un appareil de mesure en ligne (7), et **en ce que** ce signal de mesure commande une vanne de régulation (4) à l'aide d'un régulateur (8), avec laquelle est effectuée la répartition du filtrat de lavage (6) en la proportion de complément (A) et la proportion de dilution (B).

8. Procédé selon l'une des revendications précédentes,
**caractérisé en ce que**
le dispositif de lavage (1) fonctionne avec un débit volumique constant dans le temps.

9. Procédé selon l'une des revendications précédentes,
**caractérisé en ce que**
une partie de la pâte à papier acceptée (5) est amenée dans la suspension (S') épaissie en contournant le dispositif de filtration (2).

10. Procédé selon la revendication 9,
**caractérisé en ce que**
la partie de la pâte à papier acceptée (5) est maintenue constante.

11. Procédé selon l'une des revendications précédentes,
**caractérisé en ce que**
une partie de la suspension (s) est amenée dans la pâte à papier acceptée (5) du dispositif de lavage (1) en contournant celui-ci.

12. Procédé selon la revendication 11,
**caractérisé en ce que**
la partie de la suspension (S) amenée dans la pâte à papier acceptée (5) est maintenue constante.

13. Procédé selon l'une des revendications précédentes,
**caractérisé en ce que**
une partie au moins des fines matières solides, donc la teneur est réglée, est constituée de matières de charge minérales, de dites cendres.

14. Procédé selon l'une des revendications précédentes,
**caractérisé en ce que**
une partie au moins des fines matières solides, dont la teneur est réglée, est constituée de particules d'encre.

15. Procédé selon l'une des revendications précédentes,
**caractérisé en ce que**
une partie au moins des fines matières solides, dont la teneur est réglée, est constituée de fragments de fibres.
